# EUROPEAN PATENT APPLICATION

(11) **EP 4 539 190 A1**
(43) Date of publication of application: **16.04.2025**
(21) Application number: 24205160.5
(22) Date of filing: 08.10.2024
(51) Int. Cl.: H01M 10/0562, H01M 50/136, H01M 50/209, H01M 50/249, H01M 50/289, H01M 50/293, H01M 50/578, H01M 50/593

(54) **BATTERY PACK FOR AN ELECTRIC ROAD VEHICLE AND METHOD FOR THE COMPENSATION OF THE THICKNESS VARIATION OF AN ELECTROCHEMICAL CELL FOR SAID BATTERY PACK**

(30) Priority: 11.10.2023 IT 202300021093
(71) Applicant: FERRARI S.p.A., 41100 Modena (IT)
(72) Inventor: VENTURI, Enrico, 41100 MODENA (IT); DI COLA, Angelica, 41100 MODENA (IT); LIGABUE, Elena, 41100 MODENA (IT)
(74) Representative: Studio Torta S.p.A.

(57) **Abstract**

A battery pack (5, 5') for an electric road vehicle (1), comprising: a first electrochemical cell (11, 12) comprising, in turn, a cathode, an anode and a solid electrolyte electrically connected to said cathode and anode; the first cell (11, 12) having a first thickness (L) along a direction (X) increasing following the activation of the first cell (11, 12); a first compensation element (15, 15') cooperating with the first cell (11, 12) along the direction (X) so as to be subjected to a compression force (F), which is variable along the direction (X) between a minimum value (Fbol) and a maximum value (Feol); the compensation element (15, 15') having a second thickness (s) along the direction (X), which is variable between a maximum value (Sbol) and a minimum value (Seol) reached at the minimum value (Fbol) and at the maximum value (Feol), respectively; the first compensation element (15, 15') being configured to plastically deform itself when it is subjected to a predetermined value (FS) of said compression force (F), which is greater than or equal the minimum value (Fbol) and is smaller than the maximum value (Feol), so as to plastically reduce the second thickness (s) for values of the force (F) exceeding the predetermined value (FS).

## Description

### CROSS-REFERENCE TO RELATED APPLICATIONS

This patent application claims priority from Italian patent application no. 102023000021093 filed on October 11, 2023, the entire disclosure of which is incorporated herein by reference.

### TECHNICAL FIELD

The invention relates to a battery pack for an electric road vehicle.

The invention also relates to a method for the compensation of the thickness variation of an electrochemical cell for a battery pack for an electric or hybrid road vehicle.

### BACKGROUND

The expression "electric road vehicle" indicates, for the purposes of this description and of the appended claims, both road vehicles with a merely electric powertrain and road vehicles with an electric-combustion hybrid powertrain equipped with at least one battery pack capable of providing electrical power.

The battery pack comprises, in a known manner, a plurality of electrochemical cells, which are connected to one another in series and in parallel so as to obtain the desired total voltage and energy density.

Each cell comprises, extremely concisely, a positive electrode commonly referred to as cathode, a negative electrode commonly referred to as anode and a chemical substance commonly referred to as electrolyte, in which the positive and negative electrodes are immersed.

It is also known to use cells with a solid-state electrolyte and cells with a metal lithium anode, in order to obtain a high energy density deemed ideal for the implementation of electric powertrains in the automotive industry.

Each cell has a thickness that is smaller than the relative length and width.

Cells with a solid-state electrolyte undergo, as a result of the electrochemical reaction taking place, an unavoidable increase in thickness during operation.

It is also necessary to ensure that the solid-state electrolyte constantly remains in contact with the electrodes by exerting a pressure and, hence, a force upon the cell from outside the cell itself.

This force must range from a minimum value to a maximum value for the entire life of the battery, thus even when the thickness of the cell increases during use.

In order to meet these requirements, it is known to use a containing structure consisting of rigid compensation elements arranged in contact with the cells according to the direction of the thickness of the cells.

These elements are capable of elastically varying their thickness and of exerting an increasing force upon the cell as the thickness of the cells increases.

However, new-generation cells have high thickness variations and require the application of particularly high maximum force values at the end of life.

This inevitably leads to the use of bulky and heavy rubber elements, consequently jeopardizing the energy density and the final weight of the battery pack.

In addition, the stiffness of the compensation elements needed to obtain the required pressure does not compensate for the tolerances of the components of the individual cells, thus making it necessary to perform, during the assembly phase, an adjustment of the pressure acting upon each cell.

Known battery packs further comprise a plurality of cooling fins interposed between the cells and designed to cool the cells.

More precisely, the battery packs have, proceeding along the thickness, a modular configuration, in which each module sequentially comprises a first cell, a layer of material resistant to high temperatures and to thermal shock, a compensation element, a second cell and a cooling fin.

Motor vehicle manufacturers need to make sure that solid-state electrolyte cells operate correctly over time, limiting at the same time the total weights and volumes thereof so as to reduce the overall dimensions and weights of the battery pack.

Furthermore, the automotive industry needs to simplify the design of the battery pack as much as possible.

### SUMMARY

The object of the invention is to provide a battery pack for an electric road vehicle, which allows manufacturers to fulfil at least one of the aforesaid needs in a simple and economic fashion.

The aforesaid object is reached by the invention, as it relates to a battery pack for an electric or hybrid road vehicle as defined in claim 1.

The invention relates to a method for the compensation of the thickness variation of an electrochemical cell for a battery pack for an electric or hybrid road vehicle as defined in claim 10.

### BRIEF DESCRIPTION OF THE DRAWINGS

The invention will be best understood upon perusal of the following detailed description of two embodiments, which are provided by mere way of non-limiting example, with reference to the accompanying drawings, wherein:
- figure 1 is a perspective view of a motor vehicle with a battery pack according to the invention, which is shown in a merely schematic manner;
- figure 2 is a front view of a casing of a first embodiment of the battery pack according to the invention;
- figure 3 is a front view of the battery pack of figure 1 and 2;
- figure 4 is a cross section along line IV-IV of figure 3;
- figure 5 is a top view of the battery pack of figures 1 to 4;
- figures 6 and 7 show respective details of figure 4 on a much larger scale;
- figure 8 is a front view of a casing of a second embodiment of the battery pack according to the invention;

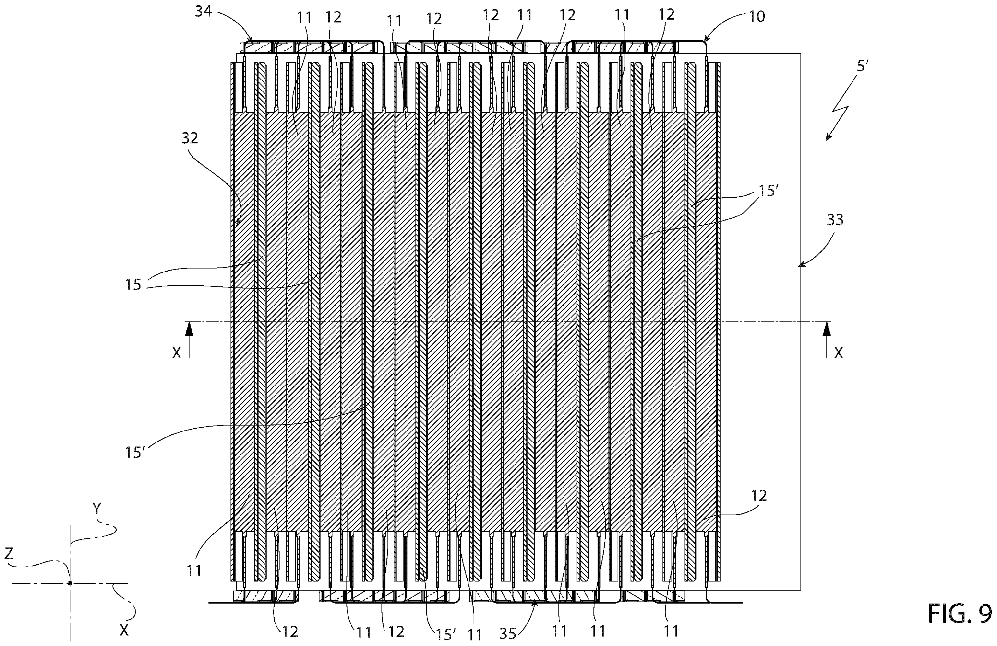

- figure 9 is a front view of the battery pack of figure 8;
- figure 10 is a cross section along line X-X of figure 9;
- figure 11 is a bottom view of the battery pack of figures 8 to 10;

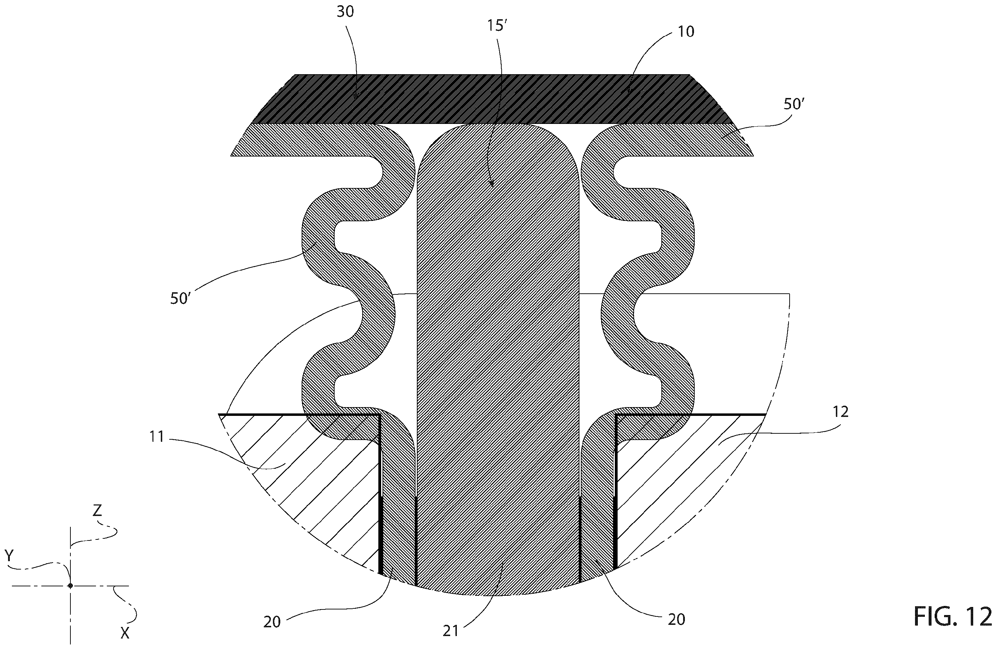

- figure 12 shows a detail of figure 10 on a much larger scale; and
- figures 13 and 14 show the trend of the force exerted by the cells upon the containing elements of the battery pack as the thickness of the cells varies, with reference to a known solution and to this invention, respectively.

### DESCRIPTION OF EMBODIMENTS

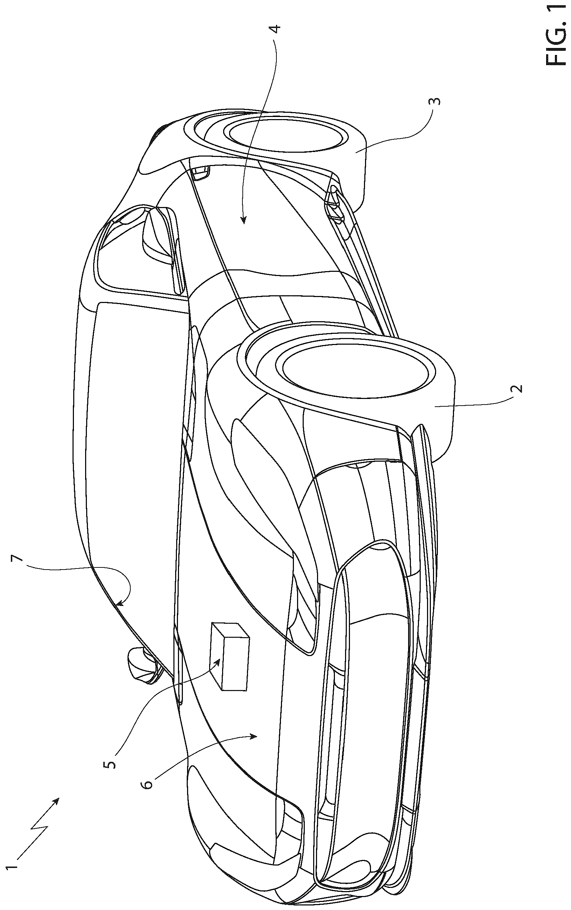

With reference to Figure 1, number 1 indicates, as a whole, a road vehicle provided with two front wheels 2 and with two rear wheels 3. The road vehicle 1 is an at least partially electric vehicle and is provided with a frame 4. The road vehicle 1 comprises a battery pack 5, in this example supported by the frame 4 inside an engine compartment 6.

In the embodiment shown herein, the battery pack 5 is arranged at the back of a passenger compartment 7, for example in the area of a vehicle floorboard, behind the seats contained inside the passenger compartment 7.

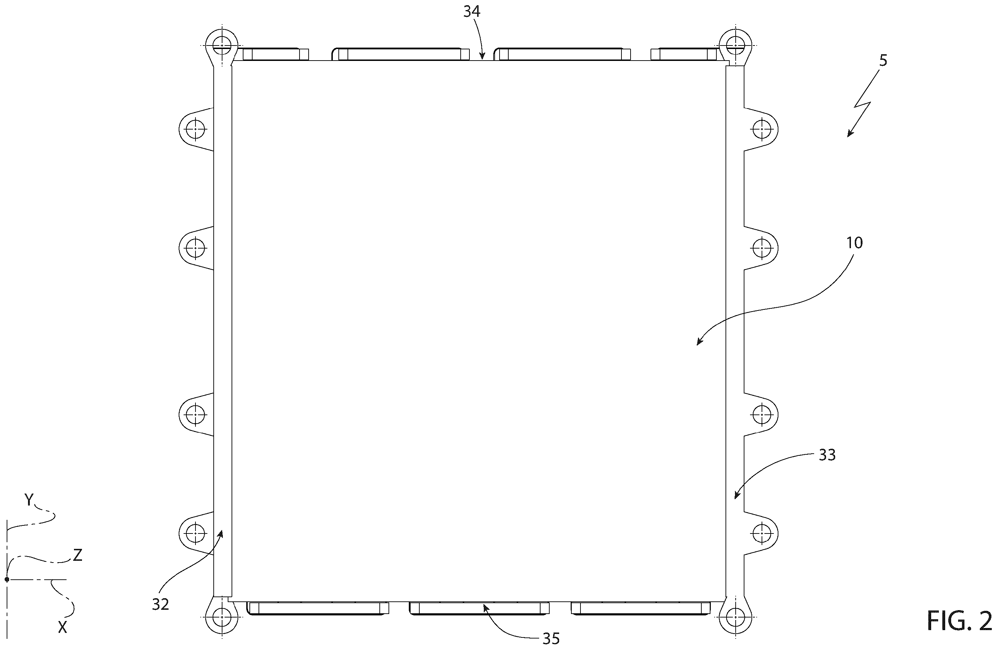

With reference to figures 2 to 7, the battery pack 5 basically comprises:
- a casing 10; and
- a plurality of cells 11, 12 housed inside the casing 10 and connected to one another in series and in parallel so as to obtain the desired total voltage and energy density.

In particular, the cells 11, 12 are side by side parallel to the X direction.

Each cell 11, 12 comprises, extremely concisely and in a known manner, a positive electrode commonly referred to as cathode, a negative electrode commonly referred to as anode and a chemical substance commonly referred to as electrolyte, in which the positive and negative electrodes are immersed.

More in detail, the casing 10 has the shape of a parallelepiped.

The casing 10 has a length along a direction Y, a width along a direction X orthogonal to the direction Y and a height along a direction Z orthogonal to the directions Z, Y.

In particular, the height of the casing 10 is smaller than the length and width of the casing 10.

Similarly, each cell 11, 12 has a length along the direction Y, a thickness along the direction X and a height along the direction Z.

In particular, the thickness L of each cell 11, 12 along the direction X is smaller than the length and height of the same cell 11 along the respective directions Y, Z.

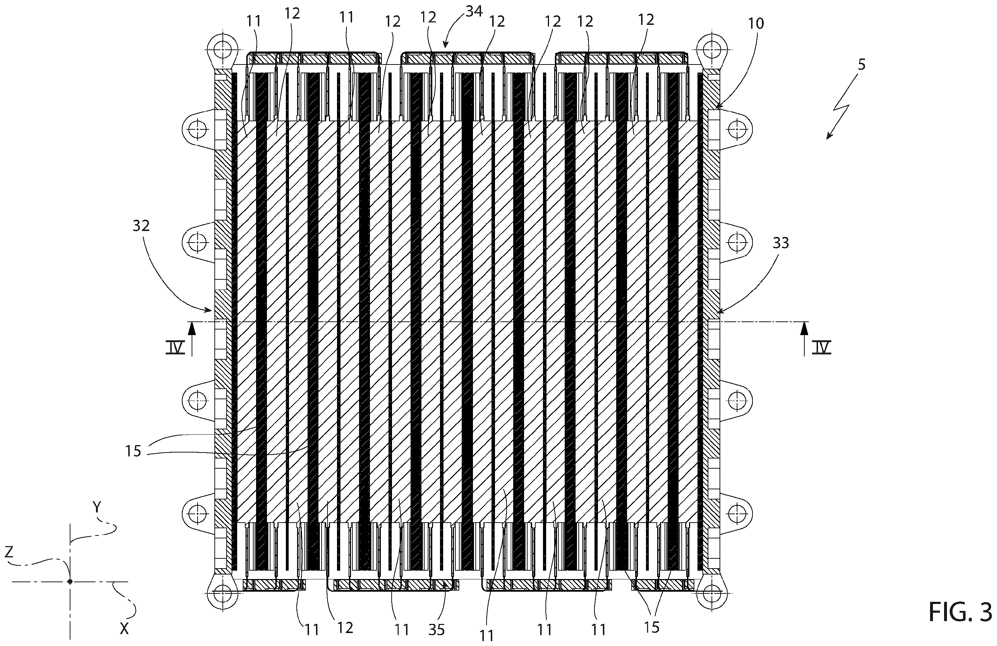

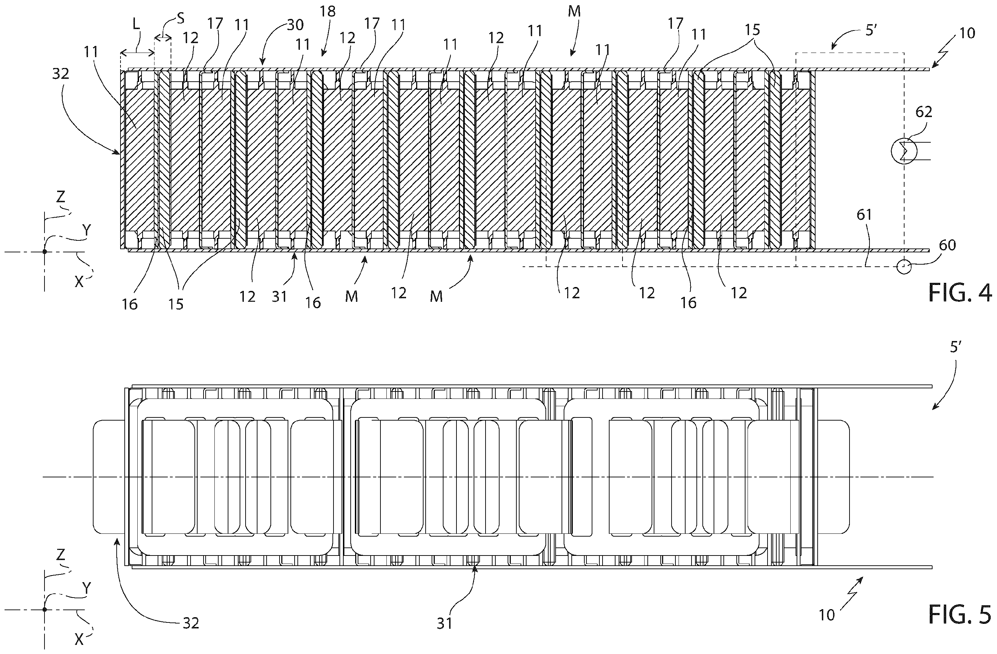

The casing 10 is delimited by:
- a pair of walls 30, 31 opposite one another along the direction Z and lying on respective planes orthogonal to the direction Z (Figure 4);
- a pair of walls 32, 33 opposite one another along the direction X, lying on respective planes orthogonal to the direction X and interposed along the direction Z between the walls 30, 31 (Figure 3); and
- a pair of walls 34, 35 opposite one another along the direction Y, lying on respective planes orthogonal to the direction Y and interposed along the direction Z between the walls 30, 31 and along the direction X between the walls 32, 33 (Figure 3).

The walls 32, 33 can be made of an electrically insulating material.

Following the electrochemical reaction performed, the thickness L of the cells 11, 12 parallel to the axis X increases during operation from a value Lbol assumed at the beginning of the use of the cells 11, 12 to a value Leol assumed at the end of the operating life of the cells 11, 12.

The battery pack 5 comprises (Figures 3 and 4), in addition:
- a plurality of compensation elements 15 cooperating with the cells 11, 12 along the direction X so as to exert a pressure and, consequently, a force F along the direction X upon the cells 11, 12 such as to ensure that the solid-state electrolyte remains in contact with the anode and the cathode;
- a plurality of layers 16 made of a material resistant to high temperature and thermal shock, for example mica, lying on a plane substantially orthogonal to the direction X and spaced apart from one another along the direction X; and
- a plurality of heat dissipation elements 17 made of a thermally conductor material, for example fins, mainly lying on a plane orthogonal to the direction X and spaced apart from one another along the direction X.

The cells 11, 12, the compensation elements 15, the layers 16 and the elements 17 define a modular structure 18 housed inside the casing 10.

More in detail, the modular structure 18 comprises a plurality of modules M sequentially repeated along the direction X.

Each module M comprises, proceeding along the direction X:
- a cell 11;
- a layer 16;
- a compensation element 15;
- a cell 12; and
- an element 17.

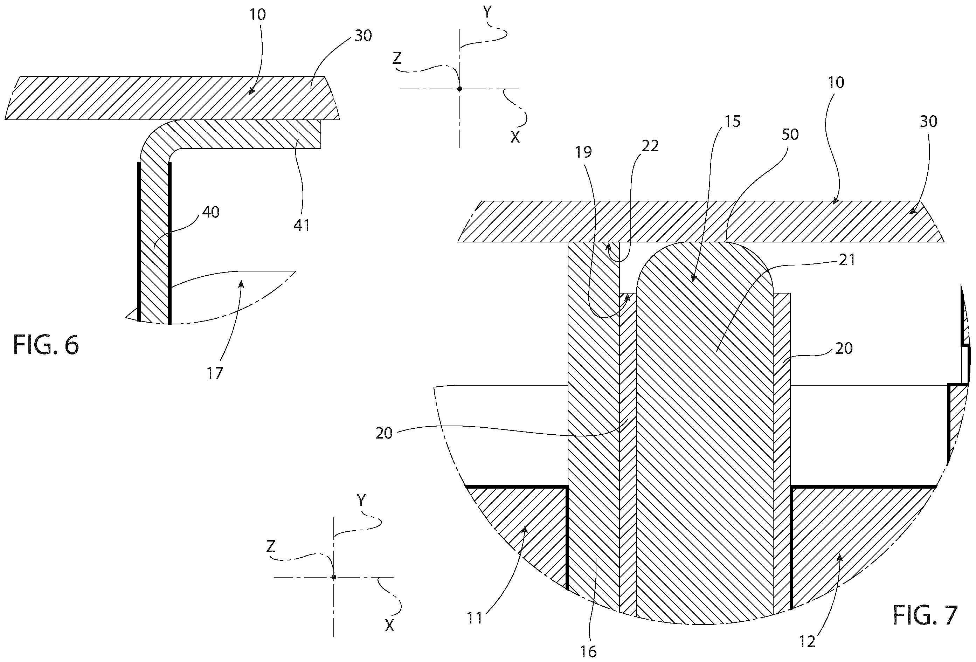

With reference to Figure 6, each layer 16 comprises respective end edges 22 opposite one another along the direction Y and fixed to the casing 10.

Following the increase in the thickness L of the cells 11, 12 during the relative operation, each compensation element 15 also has a thickness S along the direction X that is variable between a maximum value Sbol and a minimum value Seol assumed at a minimum value Fbol and a maximum value Feol, respectively, of the force F.

In particular, the minimum value Fbol of the force F corresponds to the maximum value Sbol of the thickness S of the compensation elements 15 and to the minimum value Lbol of the thickness L of the cells 11, 12 and the maximum value Feol of the force F corresponds to the minimum value Seol of the thickness S of the compensation elements 15 and to the maximum value Leol of the thickness L of the cells 11, 12.

Advantageously, each compensation element 15 is configured to plastically deform itself when it is subjected to a predetermined value FS of compression force F, which is greater than or equal the minimum value Fbol and is smaller than the maximum value Feol, so as to plastically reduce the thickness S for values of said force F exceeding said predetermined value FS.

In the specific case shown herein, the value FS of the force F is greater than the minimum value Fbol.

In this way, each compensation element 15 elastically reduces its thickness S when subjected to a compression force F comprised between the minimum value Fbol and the value FS and plastically reduces its thickness S when subjected to a compression force F comprised between the value FS and the maximum value Feol.

In the specific case shown herein, the ratio between the maximum value Feol and the minimum value Fbol is smaller than two, in particular smaller than or equal to 1.5.

Each compensation element 15 comprises, in particular:
- a pair of walls 20 parallel to one another, respectively lying orthogonally to the direction X and spaced apart from one another along the direction X; and
- a body 21 interposed between the walls 20 along the direction X.

With reference to Figure 7, the walls 20 are spaced apart along the direction Z from the walls 30, 31.

The body 21 comprises, in turn, respective rounded ends 50, protruding from the walls 31, 32 along the Z direction and in contact with the walls 30, 31.

In the specific case shown herein, each compensation element 15 is made of a porous material. Alternatively, each compensation element 15 is made of a metal material.

In particular, each element 17 comprises, in turn (Figure 6):
- a main portion 40 lying on a plane orthogonal to the X direction; and
- a pair of ends 41 opposite one another along the direction Z and bent from the main portion 40 towards the wall 33 orthogonally to the direction Z.

The battery pack 5 preferably comprises (Figure 4):
- a pump 60 (only schematically shown);
- a feeding circuit 61 (also only schematically shown) for a cooling heat transfer fluid configured to feed the fluid into the bodies 21 of the compensation elements 15 at a lower temperature; and
- a heat exchanger 62 (also only schematically shown) designed to cool the heat transfer fluid heated by the bodies 21.

In the specific case shown herein, the heat transfer fluid is a liquid under pressure.

In use, the cells 11, 12 electrically connected to one another generate the voltage and energy density required for the battery pack 5 through an electrochemical reaction that takes place in the respective anode and cathode.

During the operation of the cells 11, 12, the compensation elements 15 ensure a level of force F parallel to the direction X and, hence, of even pressure on the cells 11, 12. This guarantees a constant contact between the electrolyte and the respective anode and cathode.

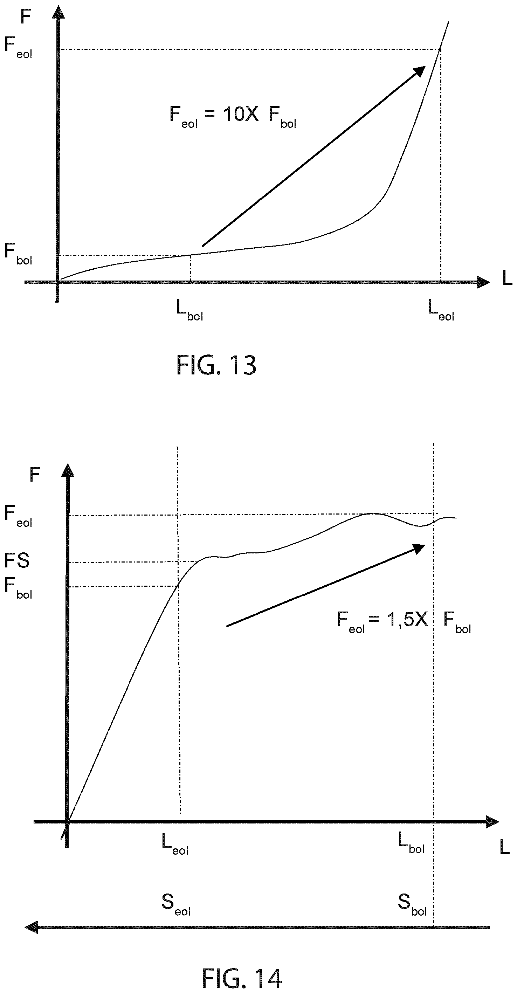

Following the operation, the thickness L of the cells 11, 12 increases from the minimum value Lbol to the maximum value Leol, exerting a compression force value F upon the compensation elements 15 that increases from the minimum value Fbol to the maximum value Feol, as shown in Figure 14.

This increase in thickness L determines a reduction in the thickness S of the compensation elements 15 from a maximum value Sbol to a minimum value Seol reached at the minimum value Fbol and at the maximum value Feol, respectively (Figure 14).

The variation in the thickness S of the compensation elements 15 occurs by elastic deformation between the minimum force value Fbol and the value FS and by plastic deformation between the value FS and the maximum force value Feol (Figure 14).

At the same time, the elements 17 thermally dissipate the heat generated by the operation of the cells 11, 12 and the layers 16 ensure resistance to uncontrolled increases in temperature and to thermal shocks deriving therefrom.

The circuit 61 feeds the heat transfer fluid into the bodies 21 of the compensation elements 15 so as to cool the respective elements 17.

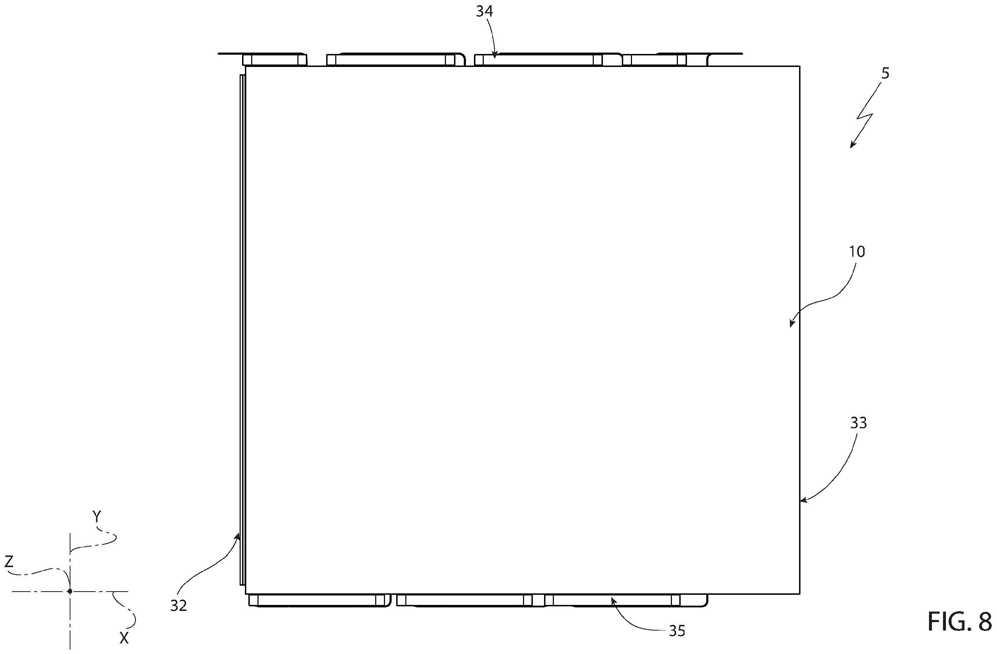

With reference to Figures 8 a 12, number 5' indicates a battery pack according to a further embodiment of the invention.

The battery pack 5' is similar to the battery pack 5 and will be described below only to the extent that it differs from the latter; equal or equivalent parts of the battery packs 5, 5' will be indicated, when possible, with the same reference numbers.

More in detail, the battery pack 5' differs from the battery pack 5 in that it does not comprise the elements 17 and in that the walls 20' are made of a thermally conductor material.

The walls 20' are designed to dissipate the heat generated by the operation of the cells 11, 12.

The walls 20' have respective ends 50' shaped like bellows and connected to respective walls 30, 31 of the casing 10.

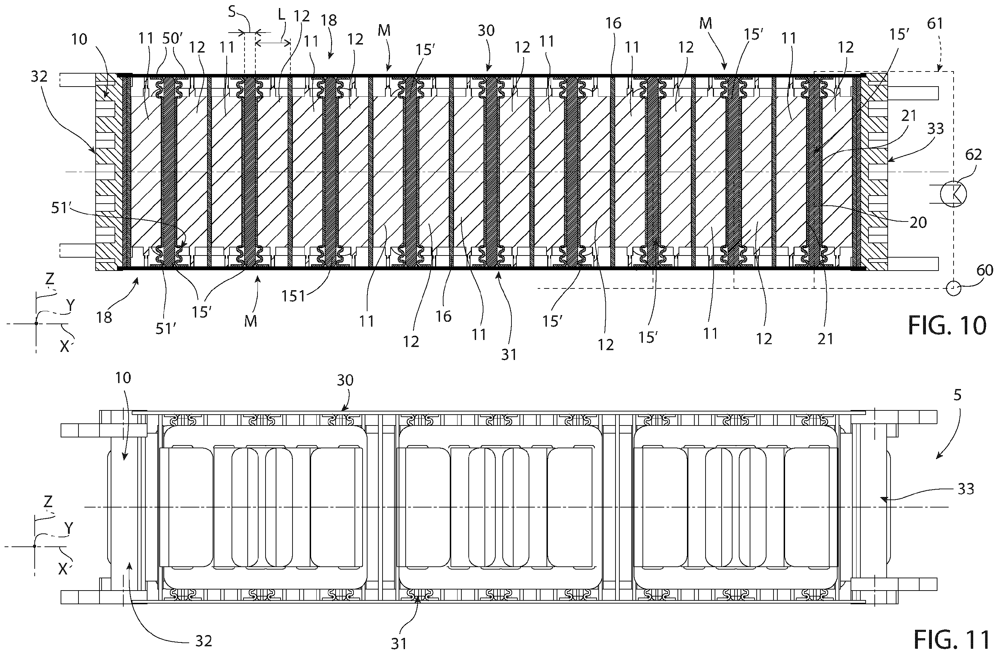

The module M' of the battery pack 5' differs from the module M of the battery pack 5 in that it comprises (Figure 10) :
- a respective layer 16;
- a respective cell 11;
- a respective compensation element 15; and
- a respective cell 12.

The operation of the battery pack 5' is similar to the one of the battery pack 5 and, therefore, it is described in detail only as far as it differs from it.

In particular, the walls 20' of the compensation elements 15' dissipate the heat generated by the operation of the cells 11, 12, actually performing the function carried out by the elements 17 of the battery pack 5.

The features of the battery packs 5, 5' and of the method according to the invention reveal evident advantages that can be obtained using them.

In particular, each compensation element 15, 15' plastically collapses when the force F exerted by the cells 11, 12 reaches the value FS, which is greater than the value Fbol and smaller than the value Feol corresponding to the respective minimum value Sbol and maximum value Seol.

Consequently, each compensation element 15, 15' plastically reduces its thickness S for values of said force F greater than said predetermined value FS.

In this way, the force values F exchanged between the compensation elements 15, 15' and the cells 11, 12 are drastically reduced compared to those characteristic of the known solutions described in the introduction to this description, as visible from a comparison between Figures 13 and 14.

For example, the ratio between the maximum value Feol and the minimum value Fbol of the forces is equal to 1.5 for the battery pack 5, 5' and equal to 10 in the known solutions described in the introduction to this description (Figure 13).

Therefore, the dimensions, weights and costs of the compensating elements 15, 15' and, hence, of the entire battery pack 5, 5' can be reduced.

Moreover, the porous or metal material of the compensation element 15, 15' compensates, during the assembly phase, for unavoidable tolerances between the various components. By so doing, the compression exerted by the compensating elements 10, 10' upon the individual cells 11, 12 does not need to be adjusted.

The walls 20' of the compensation element 15' are designed to dissipate the heat generated by the operation of the cells 11, 12.

In this way, the compensation elements 15' help limit any uncontrolled temperature increases and thermal shocks deriving from the operation of the cells 11, 12, with no need to provide additional elements 17 in addition to the compensation elements 15'.

The circuit 61 feeds the heat transfer fluid into the bodies 21 so as to cool the respective compensation elements 15, 15' and further reduce the risk of uncontrolled temperature increases and thermal shocks deriving from the operation of the cells 11, 12.

Finally, the battery pack 5, 5' and the method disclosed and shown herein can be subject to changes and variants, which do not go beyond the scope of protection set forth in the appended claims.

In particular, the value FS of the compression force F could be equal to the minimum value Fbol and smaller than the maximum value Feol.

In this way, each compensation element 15 plastically reduces its thickness S when subjected to a compression force F comprised between the minimum value Fbol and the maximum value Feol.

## Claims

1. A battery pack (5, 5') for an electric road vehicle (1), comprising:
- at least one first electrochemical cell (11, 12) comprising, in turn, a cathode, an anode and a solid electrolyte electrically connected to said cathode and anode;
the first cell (11, 12) having a first thickness (L) along a direction (X) increasing, in use, following the activation of said first cell (11);
- a first compensation element (15, 15') cooperating with said first cell (11, 12) along said direction (X) so as to be subjected, in use, to a compression force (F), which is variable along said direction (X) between a minimum value (Fbol) and a maximum value (Feol); said compensation element (15, 15') having a second thickness (s) along said direction (X), which is variable between a maximum value (Sbol) and a minimum value (Seol) reached at said minimum value (Fbol) and at said maximum value (Feol), respectively;
**characterized in that** said first compensation element (15, 15') is configured to plastically deform itself when it is subjected, in use, to a predetermined value (FS) of said compression force (F), which is greater than or equal said minimum value (Fbol) and is smaller than said maximum value (Feol), so as to plastically reduce said second thickness (s) for values of said force (F) exceeding said predetermined value (FS).

2. The battery pack according to claim 1, **characterized in that** said compensation element (15, 15') is made of a porous material.

3. The battery pack according to claim 1, **characterized in that** said compensation element (15, 15') is made of a metal material.

4. The battery pack according to any one of the preceding claims, **characterized in that** it comprises a support (10) accommodating said first cell (11, 12) and said first compensation element (15, 15'), and **in that** said first compensation element (15, 15') comprises, in turn:
- a pair of walls (20) spaced apart from one another and orthogonal to said direction (X); and
- a body (21) interposed between said walls (20) along said direction (X).

5. The battery pack according to any one of the preceding claims, **characterized in that** it comprises a second electrochemical cell (12, 11) immediately consecutive to said first electrochemical cell (11, 12) along said first direction (X);
said first compensation element (15) being interposed, along said direction (X), between said first and second cell (11, 12);
said battery pack (5) further comprising:
- a third cell (11, 12) immediately consecutive to said second cell (12, 11) along said first direction (X); and
- an element (17), which is made of a heat conductor material, is distinct from said first compensation element (15), is interposed between said second and third cell (12, 11; 11, 12) and is designed to dissipate the heat generated, in use, by said battery pack (5).

6. The battery pack according to claim 5, when it depends on claim 4, **characterized in that** said walls (20) have respective end edges (19), which are opposite one another along a direction (Y) transverse to said first direction (X) and are spaced apart by said support (10);
said body (21) projecting along said second direction (Y) relative to said walls (20).

7. The battery pack according to any one of the claims from 4 to 6, **characterized in that** said walls (20') of said compensation element (15') are made of a heat conductor material and are designed to dissipate the heat generated, in use, by said battery pack (5').

8. The battery pack according to claim 7, **characterized in that** said walls (20') are constrained to said support (11) by means of a pair of ends (50') shaped like a bellows.

9. The battery pack according to any one of the preceding claims, **characterized in that** it comprises a feeding circuit (61) designed to feed a fluid under pressure into said compensation element (15, 15') so as to dissipate the heat generated, in use, by the activation of said first cell (11, 12).

10. An electric or hybrid road vehicle (1), comprising a battery pack (5, 5') according to any one of the preceding claims.

11. A method for the compensation of the variation of a first thickness (L) along a direction (X) of an electrochemical cell (11, 12) for a battery pack (5, 5') for an electric or hybrid road vehicle (1);
- said cell (11, 12) comprising, in turn, a cathode, an anode and a solid electrolyte electrically connected to said cathode and anode;
said method comprising the steps of:
i) activating said cell (11, 12) so as to determine an increase in said first thickness (L) of the cell (11, 12) along said direction (X) increasing, in use, following the activation of said cell (11, 12); and
ii) varying a second thickness (s) along said direction (X) of a compensation element (15, 15') cooperating with said cell (11, 12) between a maximum value (Sbol) and a minimum value (Seol) reached at a minimum value (Fbol) and at a maximum value (Feol), respectively, of a variable compression force (F) exerted by said cell (11, 12) upon said compensation element (15, 15');
**characterized in that** it comprises the step iii) of reducing, through plastic deformation, said second thickness (s) for values of said force (F) exceeding a predetermined value (FS) of said compression force (F); said predetermined value (FS) being greater than or equal to said minimum value (Fbol) and being smaller than said maximum value (Feol).

12. The method according to claim 11, **characterized in that** it comprises the step iv) of feeding a fluid under pressure into said compensation element (15, 15') so as to cool said cell (11, 12).
